# EUROPEAN PATENT APPLICATION

(11) **EP 1 158 477 A2**
(43) Date of publication of application: **28.11.2001**
(21) Application number: 01304532.3
(22) Date of filing: 23.05.2001
(51) Int. Cl.: G08C 19/02, H04Q 9/00

(54) **Communication bus connecting sensor modules to a master module**

(30) Priority: 23.05.2000 US 206524 P; 25.05.2000 US 206949 P; 20.04.2001 US 285584 P
(71) Applicant: ENDEVCO CORPORATION, San Juan Capistrano, California 92675 (US)
(72) Inventor: Karolys, Alexis G., San Clemente, California 92672 (US); Gen-Kuong, Fernando F., Laguna Niguel, California 92677 (US); Eller, Eldon E., San Marcos, California 92078 (US)
(74) Representative: Greenwood, John David

(57) **Abstract**

A sensor communication system (10) includes different sensor modules (58) which are connected to a master module on a two-wire multidrop transducer bus to provide multiple communication channels. The sensor modules (58) transmit signals to and receive signals from the master module.

## Description

Sensors, also known as transducers, are used to measure different types of phenomena, such as temperature, acceleration, pressure and flow and convert these phenomena to analog voltages. Traditionally, vibration monitoring devices for aircraft have used analog sensors for functions, such as loads monitoring, drive train vibration monitoring, and airframe vibration monitoring. In the manufacturing of large aircraft, extensive testing routines are employed in which hundreds and even thousands of sensors are deployed throughout the aircraft. The use of analog sensors requires dedicated point-to-point wire harnesses for each sensor, bulky instrumentation (i.e. signal conditioning, data multiplexing, and data acquisition) consuming substantial power. In a typical test configuration, each of the sensors is coupled to a data acquisition and analysis system employing an individual pair of wires resulting in very large bundles of cables throughout the aircraft. The required dedicated cables and analog interface hardware impacts weight, cost and reliability of the aircraft. Modal analysis and the factory environment are other applications in which a multitude of distributed sensors is typically deployed with each sensor individually and separately connected to a data analysis system.

The present invention is as claimed in the claims.

The present invention features a communication bus for coupling signals between a master module and slave sensor modules including a two-wire bus coupled to the master module and the slave sensor modules. The two-wire bus provides plural digital communication channels simultaneously.

A sensor communication system may include a communication bus having at least two digital communication channels. Plural slave sensor modules may be coupled to the communication bus operable to transmit slave sensors signals and to receive master control signals in the at least two digital communication channels. A master module may be coupled to the communication bus operable to transmit the master control signals and to receive the slave sensor signals in the at least two digital communication channels.

A two-wire multidrop transducer bus carrying power, clock, control master signals transmitted by a master module, and slave sensor signals transmitted by a slave sensor/transducer slave module may be provided having the following features:
1) The bus is part of a multidrop digital communication network that allows digital smart sensors to simultaneously (synchronously) sample the analog output of a sensor and sequentially (time division multiplexing) transmit the digital data back to a master bus controller. A master module distributes a synchronization clock signal to all the slave sensor modules.
2) A command to transmit the sampled data from one slave sensor module can be sent at the same time while the master module is receiving the data from another slave sensor module.
3) The bus system operates with low power. The transducer bus distributes power to minimize the number of connectors in each module. Each module consumes very little power to minimize IR drops in the line. A thicker cable can be used at the expense of increased size and weight.
4) Small size is desired to reduce weight and to minimize the impact on sensor performance (i.e., frequency response of accelerometers). Connectors are usually the biggest component and, therefore, the number of pins in the connector and the number of connectors in the sensor module are minimized.
5) The device can be produced at a low cost.

The foregoing and other objects, features and advantages of the invention will be apparent from the following more particular description of preferred, exemplary, embodiments of the invention, as illustrated in the accompanying drawings in which like reference characters refer to the same parts throughout the different views. The drawings are not necessarily to scale, emphasis instead being placed upon illustrating the principles of the invention.

FIG. 1 is a schematic block diagram of a digital transducer system in accordance with the present invention.

FIG. 2 is a schematic block diagram of the integration of instrumentation functions.

FIG. 3 is a schematic drawing of a 4-pair (8 wires) transducer system.

FIG. 4 is a schematic drawing of a daisy chain implementation of the system of FIG. 3.

FIG. 5 is a schematic drawing of 4 communication channels on 4-wire or 4 differential wires using T-junction implementation of the system of FIG. 3.

FIG. 6 is a schematic drawing of a 2-wire T-junction implementation of the present invention.

FIG. 7 is a schematic drawing of a one-wire plus shield embodiment of the invention.

FIG. 8 is a schematic drawing of an embodiment of the invention using orthogonal Walsh codes.

FIG. 9 is a timing diagram of the various signals present in the transducer bus line for the FIG. 8 implementation.

FIG. 10 is a block diagram of correlation receiver for the transducer bus line.

FIG. 11 is a timing diagram for the received sensor signal RxS.

FIG. 12 is a timing diagram for the received master signal RxM.

FIG. 13 is a schematic drawing of a more detailed description of FIG. 7 of the invention using code division multiple access (CDMA) protocol.

FIG. 14 is a timing diagram for the signals created from the schematic drawing of FIG. 13.

FIG. 15 is a schematic drawing of an embodiment of the invention using clock and two (2) digital communication channels.

FIG. 16 is a schematic drawing of an embodiment of the invention using clock and three (3) digital communication channels.

FIG. 17 is a schematic drawing of an embodiment of the invention using clock and four (4) digital communication channels.

FIG. 18 is a schematic drawing of a more detailed description of FIG. 7 of the invention using pulse amplitude modulation (PAM) protocol.

### DETAILED DESCRIPTION

A description of preferred embodiments of the invention follows.

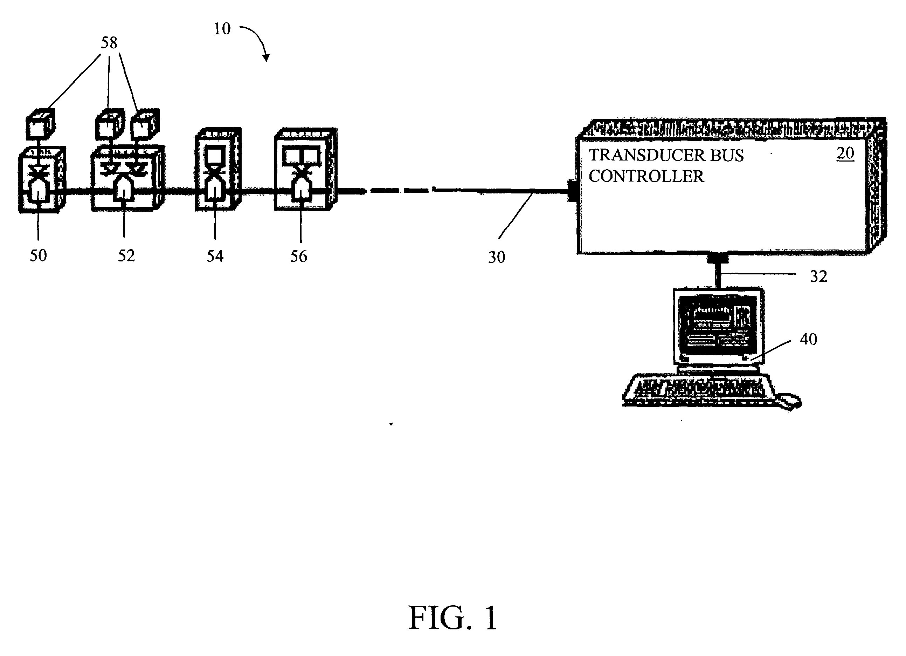

Referring to FIG. 1, a digital transducer system 10 is shown which illustrates the principles of the present invention. The Transducer Bus Controller (TBC) 20 provides a gateway between the Transducer Bus 30 and a host computer 40. A conventional computer system bus 32 couples the TBC 20 to a host computer 40 for data acquisition and analysis. The TBC 20 communicates digitally with the Transducer Bus Interface Modules (TBIMs) 50, 2-channel TBIMs 52,..., N-channel TBIMs (not shown), Network Transducers (NT) 54 and 2-channel NTs 56,..., N-channel NTs (not shown) through a full duplex serial digital bus. The TBIMs 50, 2-channel TBIMs 52, and N channel TBIMs (not shown) are coupled to sensors or transducers 58 that communicate back to the TBC 20 on the Transducer Bus 30. The TBC 20 provides DC power to the TBIMs 50, 2-channel TBIMs 52, Network Transducers (NT) 54 and 2-channel NTs 56 and it provides a master clock to achieve synchronous/simultaneous data sampling among all the TBIMs 50, 2-channel TBIMs 52, Network Transducers (NT) 54 and 2-channel NTs 56 on the Transducer Bus 30.

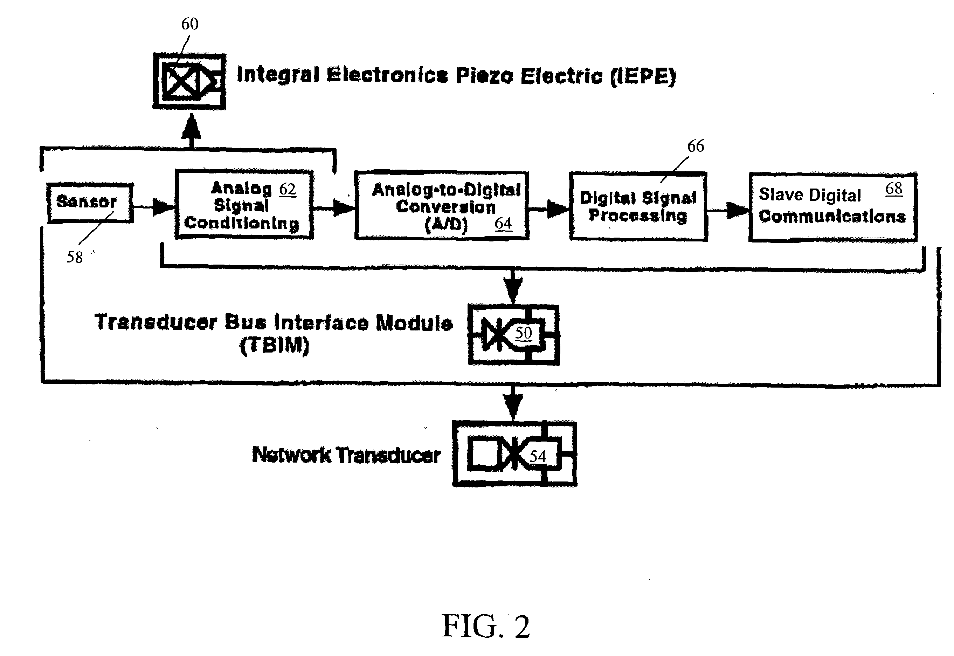

The block diagram in FIG. 2 shows the relationship between measurement instrumentation system and a Piezo-Electric transducer with Integral Electronics (IEPE) 60, a TBIM 50, and a NT 54 and can be an Isotron, ICP or Deltratron device, for example. The IEPE 60 integrates: sensors or transducers 58 and an analog signal conditioning module 62. The TBIM 50 integrates: (1) analog signal conditioning module 62, (2) analog-to-digital conversion module 64, (3) digital signal processing module 66, and (4) slave digital communications module (SDCM) 68. The NT 54 is an analog transducer integrated together with a TBIM 50.

The sensor 58 is a basic transducer (as defined by the American National Standard, ANSI MC6.1-1975) that uses various sensing technologies (i.e. Piezo-electric, Piezo-Resistive, capacitive, inductive, reluctive) to produce an electrical output (i.e. voltage, current, charge) in response to a physical measured quantity, property or condition. The analog signal conditioning module 62 refers to the process and steps involved to provide an appropriate analog output signal (i.e. amplified, filtered) to the analog-to-digital converter (A/D) 64. The analog-to-digital converter (A/D) module 64 produces a digital output from the sampled analog waveform produced by the analog signal conditioning module 62. The digital signal processing (DSP) module 66 processes the sampled analog waveform in the discrete time domain using various DSP techniques (i.e. digital filtering, multirate filtering, averaging, RMS, event detection). The slave digital communications module (SDCM) 68 performs all the necessary functions needed to (1) transmit either the analog/digitally processed sampled signal or the transducer electronic data sheet (TEDS) that describes either the TBIM 50 or network transducer (NT) 54, and (2) receive commands from the MDCM 70.

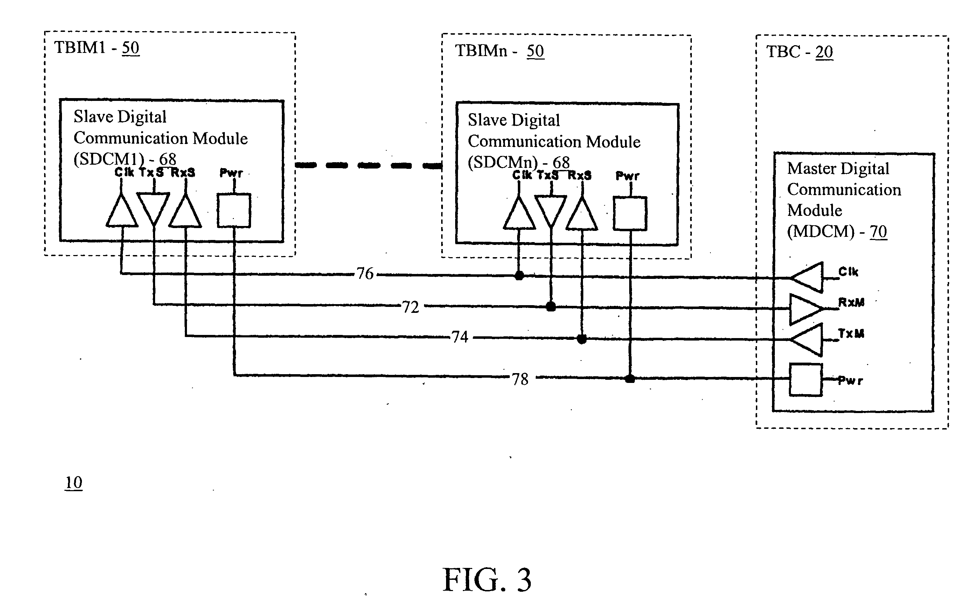

FIG. 3 shows a straightforward implementation of a multidrop digital transducer system 10 (TBIM 50 and TBC 20 only show the details of the slave digital communication module 68 and the master digital communications module 70). System 10 requires 4 twisted pair lines: (1) Transmit (TxM/RxS) 70, (2) Receive (RxM/TxS) 72, (3) Clock (Clk) 74, and (4) Power 76. Unshielded Twisted Pair (UTP) 4-pair Category 5 cable used in 10Base-T Ethernet applications can be used to interconnect the transducer bus 30. RS-485 differential drivers are used for TxM, TxS, and Clock signals.

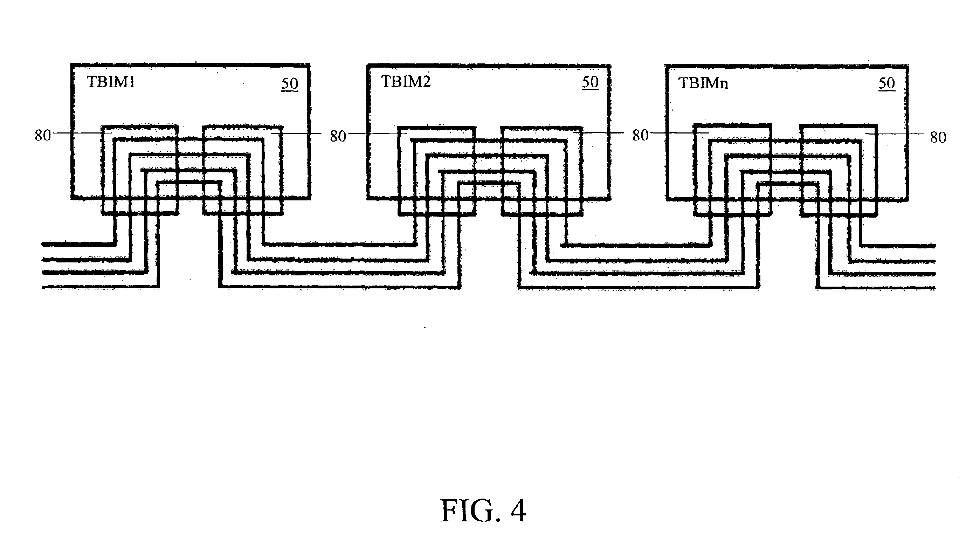

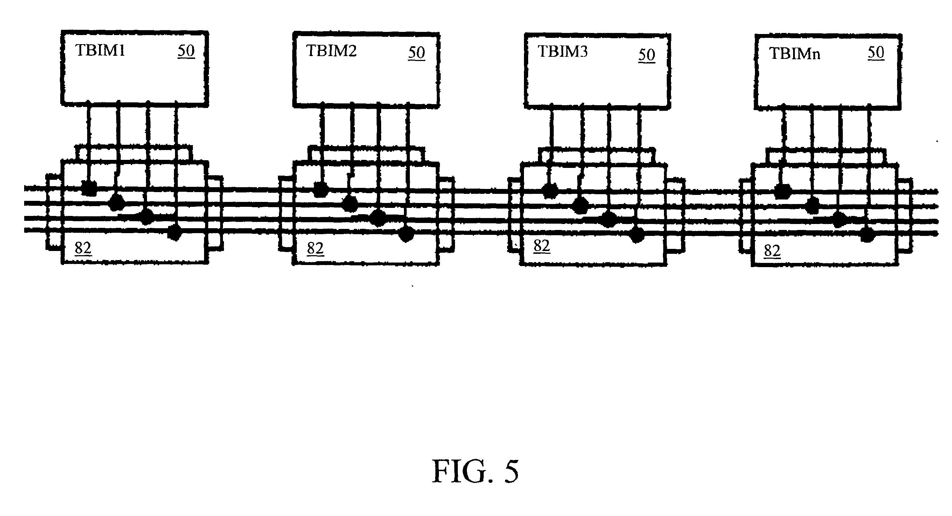

One difficulty with the UTP 4-pair cable is the logistics of interconnecting the sensor modules. FIG. 4 shows a possible daisy chaining configuration. The problem with this approach is that it requires 2 connectors 80 per TBIM 50, hence making the TBIM 50 larger. FIG. 5 shows 4 communication channels on 4-wires or 4 differential wires using T-junctions 84. Unfortunately, 4-wire or 4 differential wire T-junctions 84 are not known to be commercially available off-the-shelf. Connectors represent a large portion (15%-30%) of a TBIMs 50 cost and therefore minimizing the number of wires in the bus reduces the size, weight, and cost of both the TBIMs 50 and Transducer Bus 30.

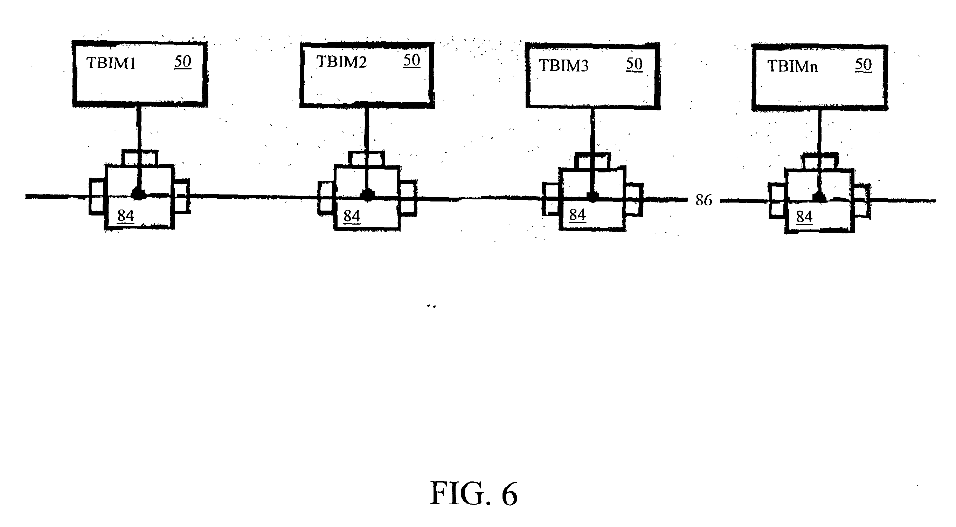

FIG. 6 refers to one embodiment of the invention, a multidrop 2-wire digital transducer bus interconnected using 2-wire T-junctions 84 and a coaxial cable 86 (1 center conductor and an outer shielding conductor). The coaxial cable 86 has a wider bandwidth (0.5-2.0GHz) than twisted pair cable and therefore it can carry more communication channels over the same cable length, or achieve higher communication rates over longer distances. Commercially available coaxial cables 86 are available in 14-22 AWG center conductors, thus providing low inline resistance 10-20 Ohms per 304.8 m (10-20 Ohms per 1,000 ft.) and more efficient power distribution due to the lower IR drops. Coaxial cable 86 also exhibits lower electromagnetic radiation and susceptibility. Some examples of commercial off the shelf (COTS) connectors used with coaxial cable are BNC (used in test instrumentation and ThinNet Ethernet), TNC, SMA, SMB, and SMC (used in video and telecommunication equipment). T-junctions 84 for BNC connectors are low cost and readily available.

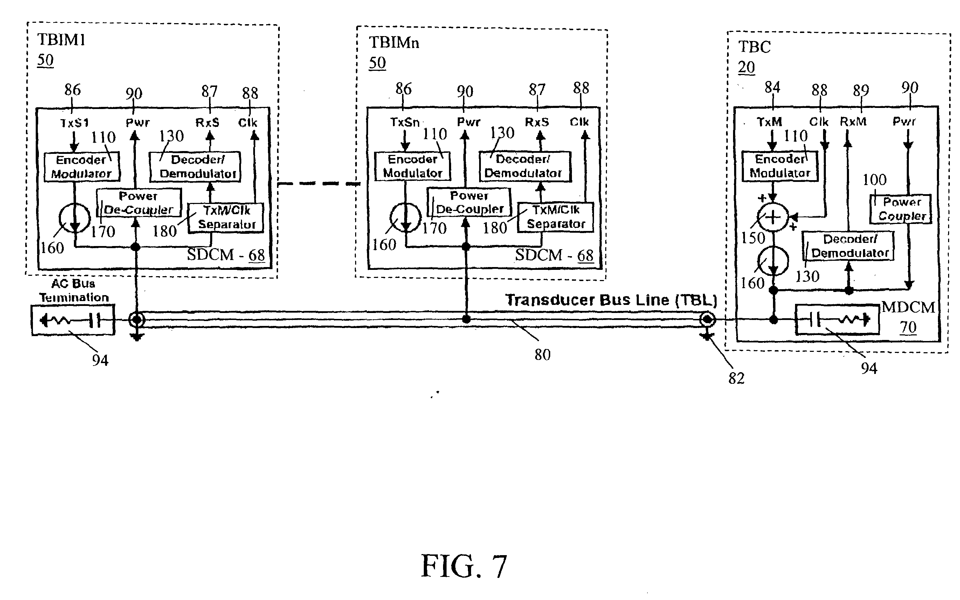

FIG. 7 shows in general, a multidrop network using 2 wires: (1) the Transducer Bus Line (TBL) 80, and (2) ground 82. The TBL 80 carries the following signals: (a) multiple digital communication channels: (TxM 84, TxSl,.., TxSn 86), (b) clock signal (Clk) 88, and (c) DC power (Pwr) 90. A feature of this physical layer approach is that as much hardware complexity as possible is placed in the MDCM 70 of the TBC 20 to simplify the hardware complexity in the SDCMs 68 of the TBIMs 50. In general, the MDCM 70 includes the following: (1) AC bus termination 94, (2) power coupler 100, (3) encoder modulator 110, (4) decoder/demodulator 130, (5) summing device 150 and (6) current driver 160. In general, the SDCM 68 includes the following: (1) power de-coupler 170, (2) encoder modulator 110, (3) decoder/demodulator 130, (4) TxM/Clk separator 180, and current driver 160.

The MDCM 70 sends master control signals including commands and the synchronizing clock signal 88 to the SDCMs 68 simultaneously while one or multiple SDCMs 68 transmit slave sensor signals including responses back to the MDCM 70. The synchronizing clock is used by the SDCMs 68 to achieve synchronous digital communication and to synchronize Analog-to-Digital (A/D) converters inside distributed TBIMs 50 with the help of a Trigger command.

Multiple digital communication channels and the clock can be transmitted simultaneously into the TBL 80 without collisions by using current drivers 160 instead of the voltage drivers traditionally used in digital communication ports such as RS232 and RS485. The AC voltage on the TBL 80 is created by the sum of all the AC current drivers into the line termination resistors 94. Current drivers are inexpensive, easy to implement, and are smaller than the transformers that otherwise would be needed if voltage drivers were used.

The baseband digital signal is transmitted with no frequency-translation (no modulation of a high frequency carrier). This simplifies hardware since there is no need of RF modems. In one embodiment of the invention, direct sequence spread spectrum (also known as Code Division Multiple Access - CDMA) is used to code each digital communication channel and achieve simultaneous multiple access. Pseudorandom Noise (PN) sequences are used for spreading the data. The spreading rate depends on the number of simultaneous digital communication channels that the TBL 80 carries.

The amplitude of the clock signal 88 transmitted by the TBC 20 is higher than the sum of all digital communication channels transmitting simultaneously. This guarantees that "zero crossings" in the composite signal carried by the TBL 80 is caused only by the clock signal 88. The SDCM 68 can extract the clock from the TBL 80 by using a simple "zero crossing" level detector.

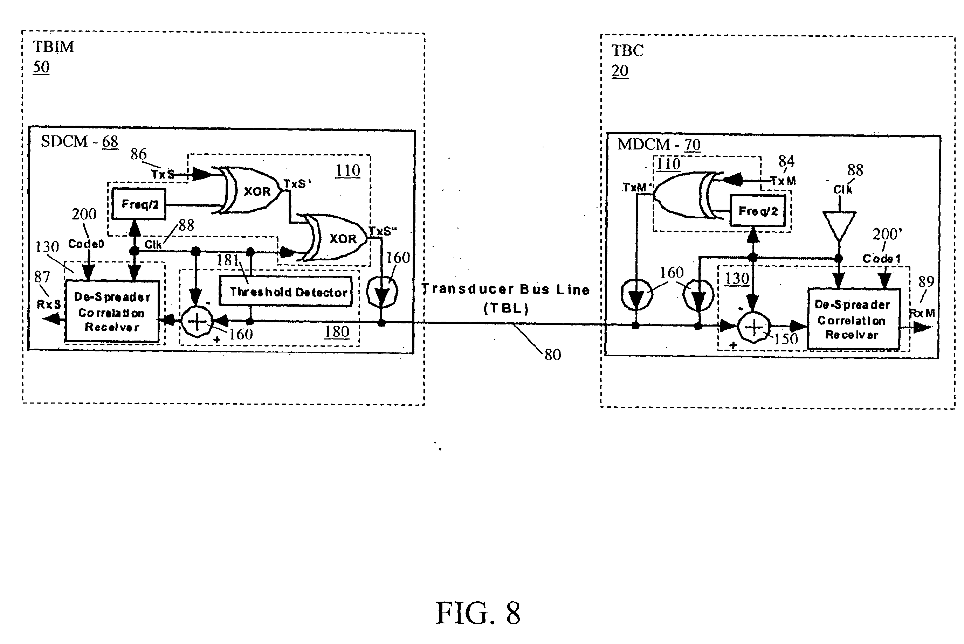

FIG. 8 shows the digital communication modules for the TBC 20 and the TBIMs 50. TxM 84 is coded/spread using orthogonal Walsh code 00 (200), and TxS 86 is coded/spread using orthogonal Walsh code 01 (200'). Spreading TxM 84 with code 00 (200) means that TxM 84 can be injected directly (no spreading), using current driver 160, into the TBL 80. Spreading TxS 86 with code 01 (200') means that TxS 86 can be injected, using current driver 160, into the TBL 80 after spreading it with the recovered clock signal 88. The clock signal 88 is recovered using a simple threshold detector 181 in the TxM/Clk Separator module 180. Both TxM 84 and TxS 86 are Manchester encoded (XORing with Clk/2) within encoder modulator 110 before encoding it with the spreading code to create a signal with a high frequency narrowband power spectral density and to suppress dc components.

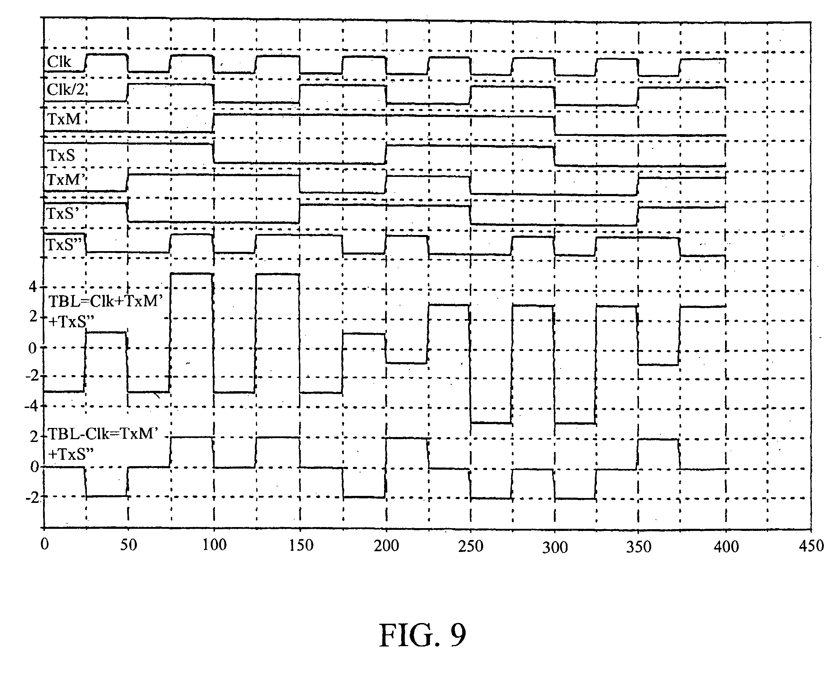

FIG. 9 shows a timing diagram for the signal present in TBL 80 if TxM 84 transmits the sequence 0110 and the TxS 86 transmits the sequence 1010 simultaneously at a 10 Mbps rate, while the 40 MHz clock signal is sent by TBC 20 with amplitude 3 times larger than the current amplitude used for TxM 84 and TxS 86. A 20 MHz clock signal 88 is used to Manchester encode TxM 84 and TxS 86. Transmission occurs at a chipping rate of 40 MHz. Chipping rate can be reduced (less bandwidth requirement) at the expense of circuit complexity by increasing the number of discrete signal levels to represent multiple bits (i.e. 00 = -2 mA, 01 = -1 mA, 10 = +1 mA, 11 = +2 mA).

The signal in the TBL 80 always crosses zero (0) at the same rate as the clock signal 88. The TxM/Clk Separator module 180 within the SDCM 68 can easily recover the clock signal 88 with a threshold comparator or a Schmitt trigger. A DC signal in the TBL 80 (i.e. DC power) can be easily accounted for by changing the threshold level in the comparator or by AC coupling the signal (a Manchester encoded signal does not have any DC components). The clock signal 88 is transmitted with amplitude greater than the total current injected by all current drivers transmitting simultaneously. The current drivers 160 for TxM 84 and TxS 86 each transmit ± 1 mA (LOW = -1, HIGH = +1), thus the current driver 160 for the clock signal 88 was chosen to be ± 3 mA (LOW = -3, HIGH = +3). The maximum amplitude of the composite signal in the TBL 80 ± 5 mA.

The maximum signal amplitude at the input of the receiver is ± 2mA after subtracting the clock signal 88 from the TBL 80. It is not necessary to extract the clock signal 88 before injecting the clock signal 88 in the TBL 80 into the correlation receiver.

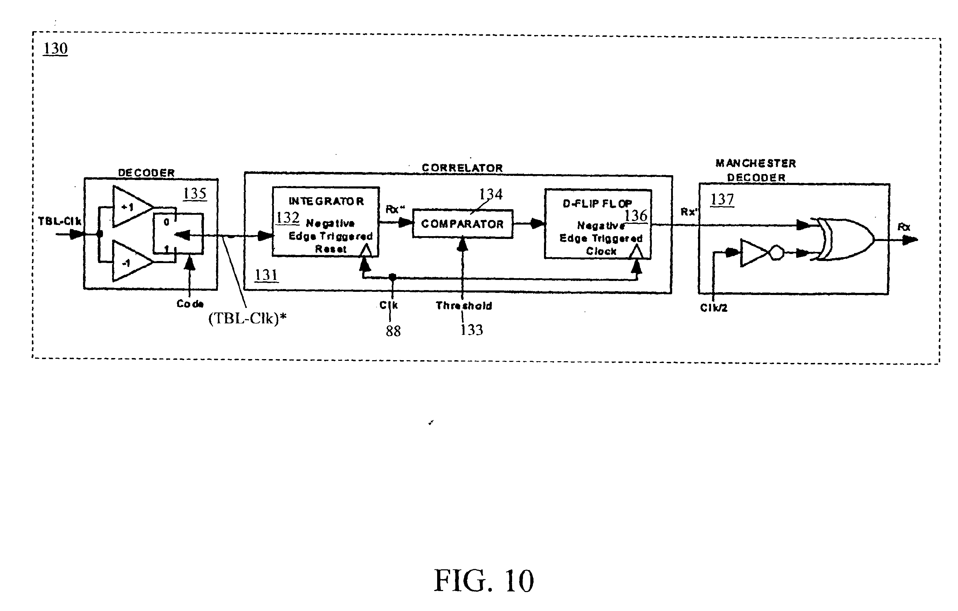

FIG. 10 shows a detailed block diagram of the de-spreader correlation receiver 130 for both the MDCM 70 and SDCM 68. The MDCM 70 decodes the signal using code 01 (200') used by the SDCM 68. The SDCM 68 decodes the signal using code 00 (200) used by the MDCM 70. For example in FIG. 8 the SDCM 68 sets Code = 0 (switch permanently passing the signal through with no inversion), and the MDCM 70 uses the clock signal 88 to decode the signal (signal passed non-inverted if Clk = 0, or inverted if Clk = 1).

The decoder 135 performs the equivalent function of a 2-input analog multiplier with limited functionality. The processed analog Signal received from the TBL 80 is injected into the first input, and the digital code sequence (i.e. Walsh or Pseudorandom Noise) whose HIGH/TRUE and LOW/FALSE states can be interpreted as values of +1 and -1 is injected into the second input. When the digital code is HIGH, the decoder 135 provides an output equal to the analog signal present at the first input (same as multiplying by +1). When the digital code is LOW, the decoder 135 provides an output equal to the inverted analog signal present at the first input (same as multiplying by -1). The correlator 131 is comprised of (1) an analog integrator 132 (a digital integrator can be used if the analog signal is first sampled using an A/D), (2) a comparator 134 to decide whether a 1 or a 0 was received, and (3) and D Flip-Flop 136 to latch the result.

The correlator 131 is implemented using an integrator 132 that is reset every 50 nsec by the negative edge of the clock signal 88. The comparator 134 makes the decision if a HIGH or LOW is detected by comparing the output of the integrator 132 to a threshold level 133. The threshold level 133 is set to zero (0) if the input signal does not contain a clock signal 88. The threshold level 133 must be set to a non-zero value (depending on the amplitude of the clock signal 88) if the clock signal 88 is not previously extracted from the composite signal before injecting it into the correlator 131. The D-flip flop 136 is used to hold the results of the comparator while the integrator works on resolving the next bit. Finally, the Manchester decoder 137 removes the Manchester encoding from the output of the correlator 131 by XORing the output with an inverted Clk/2 signal.

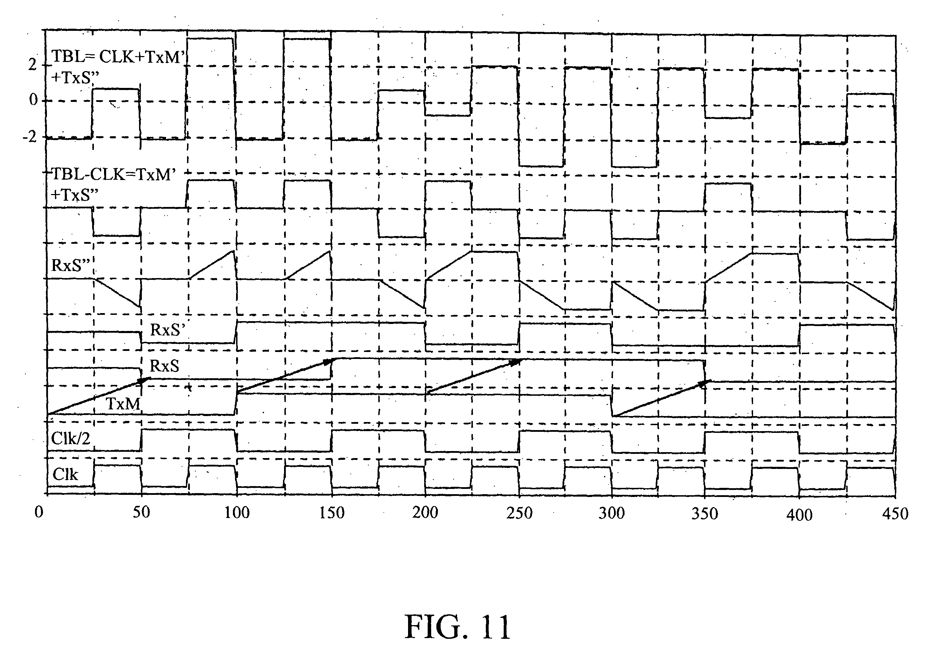

FIG. 11 shows a timing diagram of the recovered signal RxS 87. The recovered signal RxS 87 is the same as the transmitted signal TxM 84, but delayed by one (1) period of the clock signal 88, which is why Clk/2 is inverted when performing Manchester decoding.

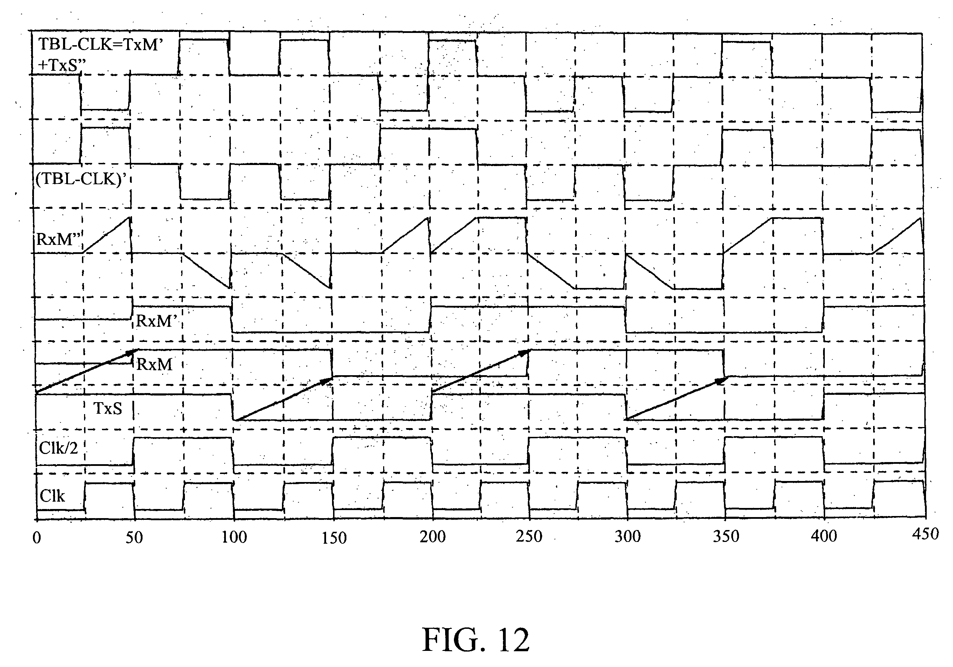

FIG. 12 shows a timing diagram of the received signal RxM 89. The recovered signal RxM 89 is the same as the transmitted signal TxS 86, but delayed by one (1) period of the clock signal 88.

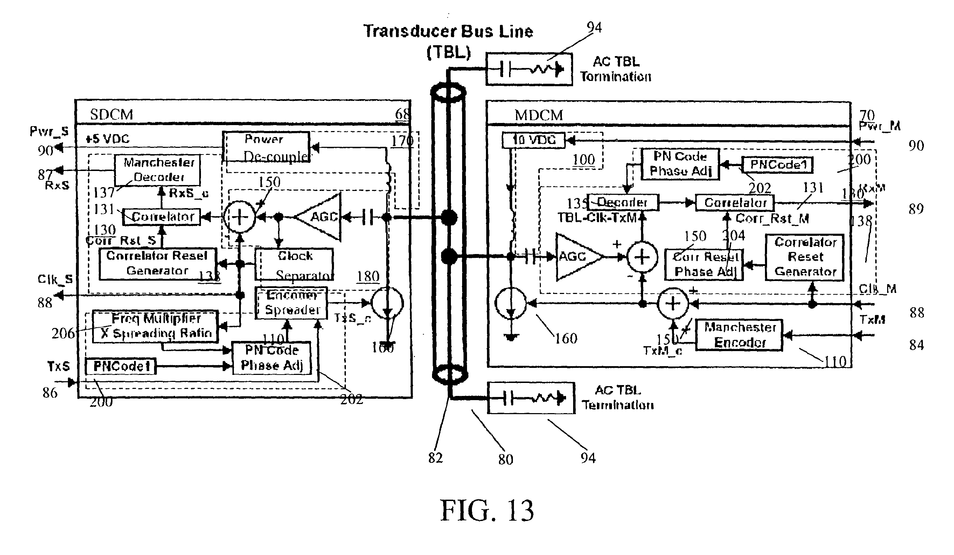

FIG. 13 shows a detailed block diagram of both the MDCM 70 and SDCM 68 using CDMA connected to the TBL 80. The notation following "_" refers to nodes within the MDCM 70 and SDCM 68 (i.e. Pwr_M, Clk_M, Pwr_S, etc.). The clock signal 88, TxM 84, and one TxS 86 is transmitted simultaneously in the TBL 80. In one embodiment of the invention, the clock signal 88 can be transmitted at 1 MHz using a current sink of 8 mA, and the TxM 84 can be transmitted at 0.5 Mbps with Manchester encoder 110 (1 Mcps) using a current sink of 2 mA while the TxS 86 can be transmitted at 1 Mbps with a spreading PN code 200 of length 7 (7 Mcps) using a current sink of 2 mA. The Frequency Multiplier 206 generates a clock signal 88 with a frequency that is an integer multiple of the input clock signal 88. This is done to maintain phase lock with the clock signal 88 transmitted by the MDCM 70 and eliminates the need for very stable crystal oscillators. PN code phase adjustment 202 is used to connect multiple SDCM 68 to the TBL 80, each transmitting with a different phase shifted version of the same PN code 200.

The capacitor in front of the automatic gain control (AGC) block is used to block the DC power 90, and passes through only the high frequency composite signal present in the TBL 80. The AGC block is used to scale the high frequency composite signal present in the TBL 80 to the proper amplitude for further processing. This scaling is needed to compensate for losses in the TBL 80. Gain adjustment could be done dynamically or simply one time at power-up if loss variations are minimal.

The PN code phase adjustment 202 in the MDCM 70 is adjustable so that the MDCM 70 can select the phase of the PN code 200 (within half a chip) to match the one used by one of the SDCM 68. Phase of the reset pulse for the integrator/correlator 131 in the MDCM 70 is made adjustable with the correlator reset phase adjustment 204 so that the MDCM 70 can synchronize its correlator 131 to compensate for propagation delays in the TBL 80. The Correlator Reset Generator 138 provides a narrow pulse signal whenever it detects high-to-low or low-to-high transition of the clock signal 88. The pulse is used to reset the integrator 132 inside the correlator131.

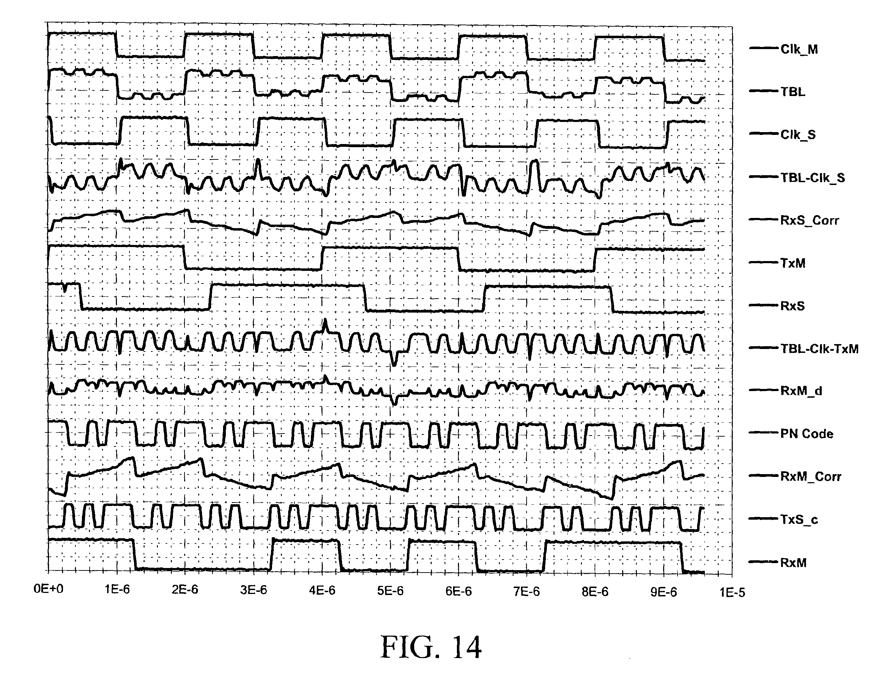

FIG. 14 shows a timing diagram for various nodes of the MDCM 70 and SDCM 68 shown in FIG. 13. The various nodes are as follows: 1) Clk_M: 0.5 MHz clock sent by the TBC 20; 2) TBL: amplified TBL signal as seen by the output of the AGC in the SDCM 68; 3) Clk_S: Clk_M recovered by the SDCM 68; 4) TBL-Clk_S: Signal resulting from subtracting Clk_S from the TBL signal in the SDCM 68; 5)RxS_Corr: Signal resulting from integrating the [TBL-Clk_S] signal in the SDCM 68; 6) TxM: Digital signal transmitted by the MDCM 70 at 0.5 Mbps; 7) RxS: Digital signal received by the SDCM 68; 8) TBL-Clk-TxM: Signal resulting from subtracting the clock signal 88 and TxM 84 in the MDCM 70; 9) RxM_d: Signal resulting from applying the pseudorandom noise (PN) code 200 (with the right phase) to the [TBL-Clk-TxM] signal in the MDCM 70; 10) PN_code: Pseudorandom noise (PN) code 200 used to decode the [TBL-Clk-TxM] signal in the MDCM 70; 11) RxM_Corr: Signal resulting from integrating the decoded [TBL-Clk-TxM] signal in the MDCM 70; 12) TxS_c: Transmitted signal TxS 86 from SDCM 68 encoded with PC_code 200 generated by SDCM 68; and 13) RxM: Digital signal received by the MDCM 70.

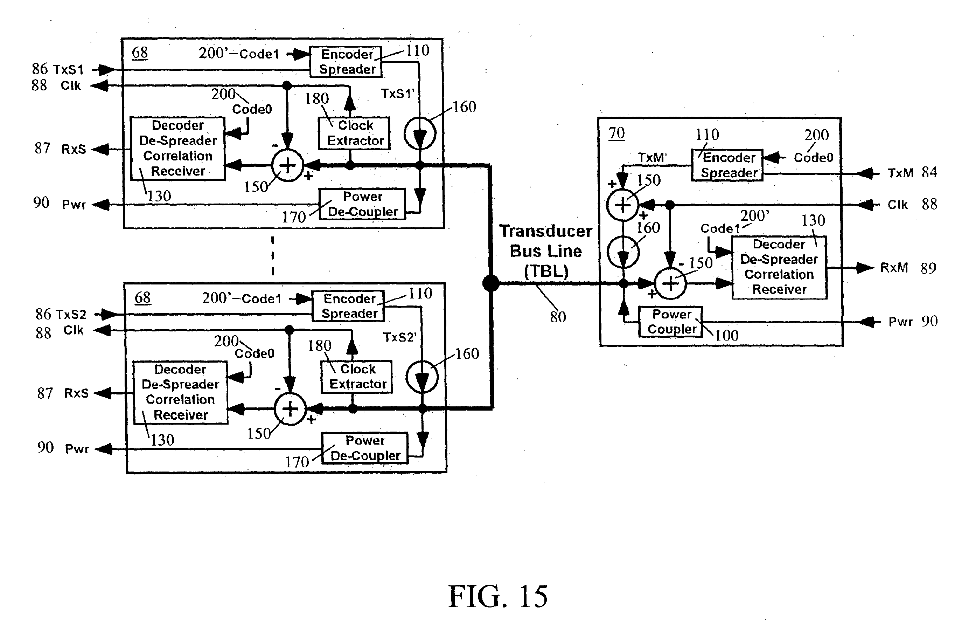

FIG. 15 shows one embodiment of the invention, a 2-wire network carrying 2 digital communication channels (full duplex). Time Division Multiplexing (TDM) is used to communicate to multiple SDCM 68 (only one SDCM 68 can transmit). Clock signal 88 is injected into the TBL 80 without any modulation, but with a high enough amplitude so the SDCMs 68 can easily recover clock signal 88 with a simple threshold detector circuit 180. Only TxM 84 and TxS 86 are coded so they can occupy the same frequency spectrum as the clock signal 88.

The TxM 84 signal transmitted by the MDCM 70 is coded with Code0 (200) and received by the SDCMs 68 using Code0 (200) for de-spreading. The TxS 86 signal transmitted by the SDCM 68 is coded with Code1 (200') and received by the MDCM 70 using Code1 (200') for de-spreading. Pseudorandom noise (PN) coding sequences are used for spreading.

Spreading is kept to a minimum since only 2 codes are needed. In general, SDCM 68 size, power consumption, circuitry complexity, and bus bandwidth usage are directly proportional to the amount of spreading.

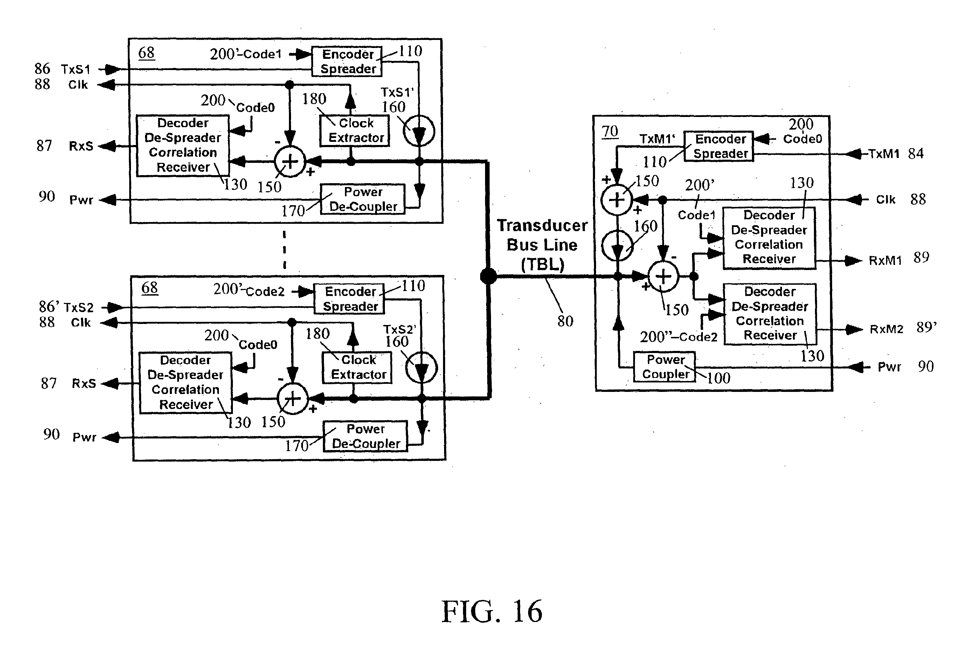

FIG. 16 shows another embodiment of the invention, a 2-wire network carrying 3 simultaneous digital communication channels. Communication channels from the SDCM 68 to the MDCM 70 can be added without increasing the complexity of the SDCM 68 by just changing the PN code used in the transmitter.

The MDCM 70 includes multiple receivers 130 (each listening to a different code) to simultaneously receive multiple communication channels (i.e. TBC uses N receivers if N sensor modules transmit simultaneously). The amplitude of clock signal 88 sent by the MDCM 70 is increased as the number of communication channels increases to guarantee that clock signal 88 can be recovered.

Possible uses for the network system shown in FIG. 16 are: (1) MDCM 70 can assign a group of SDCM 68 to transmit using code1 (200'), and the remaining SDCMs 68 to transmit using code2 (200"); (2) MDCM 70 can assign exclusive use of codel (200') to one SDCM 68 that may have been designated to transmit messages such as alarms or other event triggering.

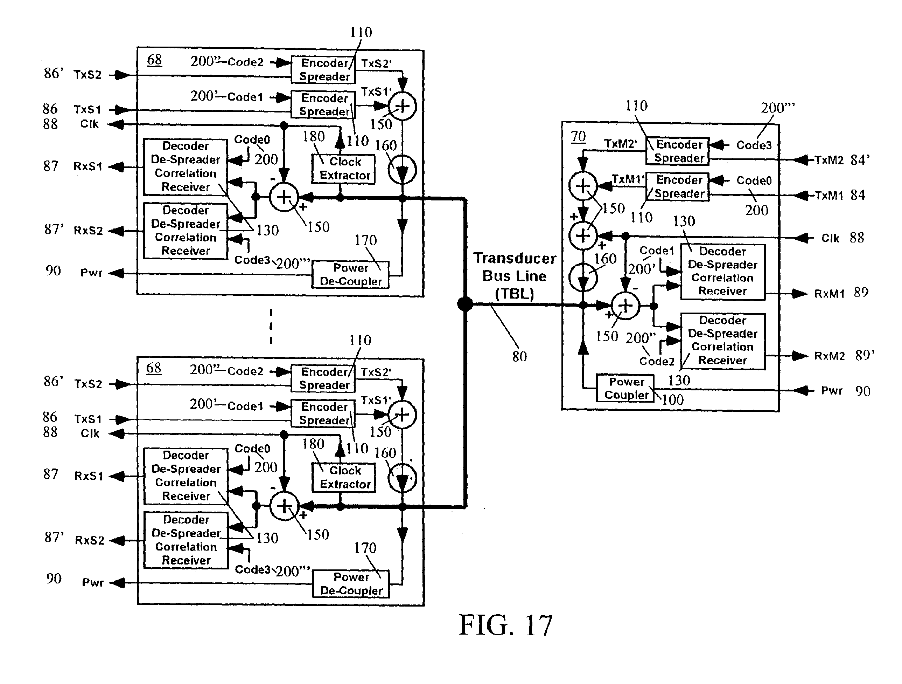

FIG. 17 shows another embodiment of the invention, a 2-wire network carrying 4 simultaneous digital communication channels. Circuit complexity, power consumption, and bus bandwidth usage increase as the number of simultaneous communication channels increases.

The receiver 130 in a SDCM 68 easily de-spreads the transmission sent by the MDCM 70 because the integration time information is contained within the clock signal 88 sent by the MDCM 70. The MDCM's 70 receiver 130 is more complex because of delays in the TBL 80 and SDCMs 68 transmitting asynchronously from the clock signal 88 generated by the MDCM 70.

Possible uses (in addition to the ones listed for FIG. 16) for the network system shown in FIG. 17 are: (1) MDCM 70 can communicate with SDCMs 68 using code 3 (200"') while it is triggering the acquisition of data using code 0 (200); (2) MDCM 70 can use code 3 (200"') to establish communication between 2 SDCMs 68 (to minimize circuitry inside the SDCM 68, synchronous receivers 130 inside SDCMs 68 cannot receive from other SDCMs 68, only from the MDCM 70).

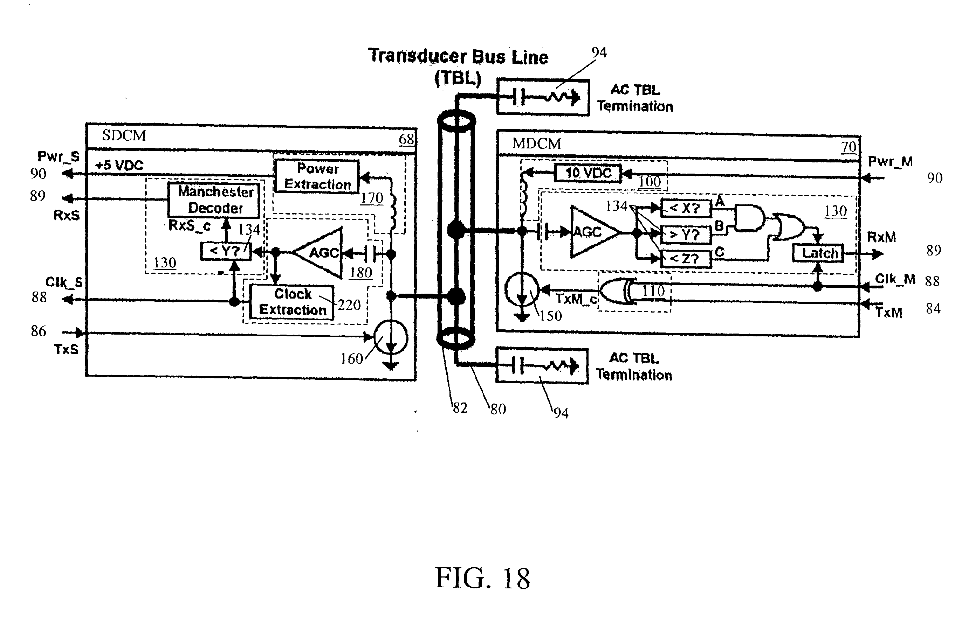

FIG. 18 shows a block diagram of both the MDCM 70 and SDCM 68 using Pulse Amplitude Modulation (PAM). The TxS 86 signal transmitted by the SDCM 68 is of amplitude 1, while the TxM 84 signal from the MDCM 70 is of amplitude 2. The SDCM 68 extracts the TxM 84 signal sent by the MDCM 70 with a single comparator 134. The MDCM 70 extracts the TxS 86 signal sent by the SDCM 68 by using 3 comparators 134, 1 AND gate, and 1 OR gate. The TxM 84 signal sent by the MDCM 70 is Manchester encoded 110. The SDCM 68 can extract the clock signal 88 from the Manchester encoded signal by using a Phase Lock Loop (PLL) in the clock extraction module 220.

The capacitor in front of the automatic gain control (AGC) block is used to block the DC power 90, and passes through only the high frequency composite signal present in the TBL 80. The AGC block is used to scale the high frequency composite signal present in the TBL 80 to the proper amplitude for further processing. This scaling is needed to compensate for losses in the TBL 80. Gain adjustment could be done dynamically or simply one time at power-up if loss variations are minimal.

While this invention has been particularly shown and described with references to preferred embodiments thereof, it will be understood by those skilled in the art that various changes in form and details may be made therein without departing from the scope of the invention encompassed by the appended claims.

## Claims

1. A communication bus for coupling signals between a master module and N slave sensor modules comprising:
a two-wire bus coupled to the master module and the N slave sensor modules, the two-wire bus providing M digital communication channels simultaneously.

2. The communication bus of claim 1, wherein the M digital communication channels include a Transmit Master/Receive Slave (TxM/RxS) channel, a Transmit Slave/Receive Master (TxS/RxM) channel and a Synchronization Clock (Clk) channel.

3. The communication bus of claim 2, and either:
a) wherein the signals are modulated using PAM, FDMA, TDMA, or CDMA encoding;
b) wherein the signals are transmitted as current using current drivers, or
c) further including a power signal distributed from the master module to the slave sensor modules.

4. A sensor communication system comprising:
a communication bus having at least two digital communication channels;
plural slave sensor modules coupled to the communication bus operable to transmit slave sensors signals and to receive master control signals in the at least two digital communication channels; and
a master module coupled to the communication bus operable to transmit the master control signals and to receive the slave sensor signals in the at least two digital communication channels.

5. The sensor communication system of claim 4, wherein the communication bus comprises a two-wire bus coupled to the master module and the plural slave sensor modules, the two-wire bus providing the at least two digital communication channels simultaneously.

6. The sensor communication system of claim 5, wherein the digital communication channels include a Transmit Master/Receive Slave (TxM/RxS) channel and a Transmit Slave/Receive Master (TxS/RxM) channel, and, optionally, either:
a) wherein the master module is operable to transmit a Synchronization Clock (Clk) signal in a clock channel;
b) wherein the signals are modulated using PAM, FDMA, TDMA or CDMA encoding;
c) wherein the signals are transmitted as current using current drivers; or
d) further including a power signal distributed from the master module to the slave sensor modules.

7. The sensor communication system of claim 4, wherein the slave sensor modules are operable to transmit slave signals in one of the at least two digital communication channels and the master module is operable to transmit master control signals in a different one of the at least two digital communication channels.

8. The sensor communication system of claim 4, wherein each slave sensor module is operable to transmit a first slave signal in a first one of the at least two digital communication channels and to transmit a second slave signal in a second one of the at least two digital communication channels, and, optionally, wherein the master module is operable to transmit a first master control signal in a third one of the at least two digital communication channels, and, further optionally, wherein the master module is operable to transmit a second master control signal in a fourth one of the at least two digital communication channels.

9. The sensor communication system of claim 4, wherein the master module comprises:
at least one encoder/modulator for encoding and modulating a master control signal for transmitting in one of the at least two digital communication channels on the communication bus; and
at least one decoder/demodulator for decoding and demodulating a slave sensor signal received in a different one of the at least two digital communication channels on the communication bus, and, optionally, either:
a) wherein the encoder/modulator and the decoder/demodulator use direct sequence spread spectrum modulatlon/demodulation;
b) wherein the encoder/modulator and the decoder/demodulator use pulse amplitude modulation/demodulation; or
c) wherein the master module includes a power coupler for coupling a power signal to the communication bus.

10. The sensor communication system of claim 4, wherein the slave module comprises:
at least one encoder/modulator for encoding and modulating a slave signal for transmitting in one of the at least two digital communication channels on the communication bus; and
at least one decoder/demodulator for decoding and demodulating a master control signal received in a different one of the at least two digital communication channels on the communication bus, and, optionally, either:
a) wherein the encoder/modulator and the decoder/demodulator use direct sequence spread spectrum moduiation/demodulation;
b) wherein the encoder/modulator and the decoder/demodulator use pulse amplitude modulatlon/demodulation; or
c) wherein the slave module includes a power de-coupler for decoupling a power signal from the communication bus.

11. A method of communication comprising:
a) coupling plural slave sensor modules and a master module to a communication bus providing at least two digital communication channels;
b) transmitting slave sensors signals and receiving master control signals in the at least two digital communication channels at the plural slave sensor modules;
c) transmitting the master control signals and receiving the slave sensor signals in the at least two digital communication channels at the master module.

12. The method of claim 11, wherein transmitting includes modulating the signals using PAM, FDMA, TDMA or CDMA encoding.
